# EUROPEAN PATENT SPECIFICATION

(11) **EP 0 800 431 B1**
(45) Date of publication and mention of the grant of the patent: **07.04.1999**
(21) Application number: 96901568.4
(22) Date of filing: 02.01.1996
(51) Int. Cl.: B23H 3/00, B23H 9/00, B23H 3/02, F16C 33/64

(54) **METHOD OF ELECTROCHEMICAL MACHINING AND BEARING MANUFACTURED WITH SAID METHOD**
VERFAHREN ZUM ELEKTROCHEMISCHEN BEARBEITEN UND LAGER HERGESTELLT MIT DIESEM VERFAHREN
PROCEDE D'USINAGE ELECTROCHIMIQUE ET PALIER USINE SELON LEDIT PROCEDE

(30) Priority: 28.12.1994 US 365396
(43) Date of publication of application: 15.10.1997
(73) Proprietor: SKF INDUSTRIAL TRADING & DEVELOPMENT COMPANY B.V., 3439 MT Nieuwegein (NL)
(72) Inventor: WARDLE, Frank, Peter, Swindon SN6 7SA (GB)
(74) Representative: Kupecz, Arpad
(86) International application number: NL9600003
(87) International publication number: WO9620060

(56) References cited:
- EP-A- 0 143 014
- DE-A- 2 032 162
- FR-A- 2 005 780
- GB-A- 1 235 339
- US-A- 4 456 516

## Description

The present invention relates to a method of electrochemically machining a metal piece, wherein by applying a voltage a current is passed across a narrow gap (1) formed by said metal piece and an adjustable electrode means (2) to locally remove material from the metal piece, electrolyte (A) being supplied to the gap (6) in a direction substantially tangential to the surface of the metal piece, and the metal piece being rotated around its axis, the amount of current being under the control of a sensing means capable of sensing the surface of the metal piece.

Such a method is known from US 4,456,516. Here the general roundness of a cylindrical shaft is improved by electrochemical machining. A bracket is shaped to be slidably associated with the shaft in a two point contact. The bracket comprises a contact sensor which controls the current passed across a gap formed by the shaft and an electrode.

It is an object of the present invention to provide a method of electrochemical machining in which a fast and precise control of the machined surface is obtained.

To this end the method according to the invention is characterized in that the metal piece is a bearing ring, and wherein the electrochemical local removal of material from the bearing ring is enhanced by controlling a parameter chosen from the group of
i) changing the speed with which the bearing ring is rotated around its axis to change the time during which a local elevation is subjected to electrochemical machining; and
ii) increasing the voltage when the gap is narrow due to a local elevation on the bearing ring, said local removal being controlled by obtaining data from a sensing means comprising the bearing ring, the adjustable electrode means and a volt-Ampere meter, and using the voltage and current being measured as data to control the parameter.

The width of the gap will vary with the angular position of the bearing ring as it rotates around its axis, in accordance with irregularities on the surface of the bearing ring as well as any out-of-roundness. The change in gap width corresponds to a change in the resistance and consequently in the current, thus removing more material when the gap is narrow and less when the gap is wide. In this way elevations are removed and the surface of the bearing ring is smoothed.

Now, according to the invention, the material is removed in a controlled way to speed up this process using the voltage and current being measured as data to control the parameter, i.e. when the gap is narrow, the electrochemical removal of material from the bearing ring is enhanced by adjusting relevant process parameters. With this active control it is possible to have more control over the final form of the bearing ring and obtain this form faster. For example, it is possible to increase the voltage when the gap is narrow due to an elevation on the metal piece, resulting in additionally increase current, which in turn enhances the removal rate. It is also possible to stop or slow down the rotation of the bearing ring around its axis, which causes in particular the elevation to be subjected to the electrochemical treatment. Thus, with the active control according to the invention there is more control over the final form of the bearing ring and this form can be achieved faster. Thus, it is possible to obtain bearing rings with improved circular form or with more complex forms.

According to a preferred embodiment, the method according to the invention is characterized in that the bearing ring is a cylindrical roller bearing inner ring and material is removed from the raceway of the outer ring while a harmonic variation is superposed on the current at three times the frequency of the rings rotational speed, resulting in a trilobed raceway.

In this way it is possible to obtain trilobed rings cheaply, which allows a more widespread use of the superior bearings containing these rings.

The invention also relates to bearings comprising rings manufactured with the method according to the invention.

The invention will now be elucidated with the aid of the drawing, illustrating the invention by way of example.
Fig. 1 is a schematic view of the key components suitable for controlled rounding off a ring.
Fig. 2 is a schematic view of the key components suitable for controlled manufacture of a rig with a trilobed raceway.

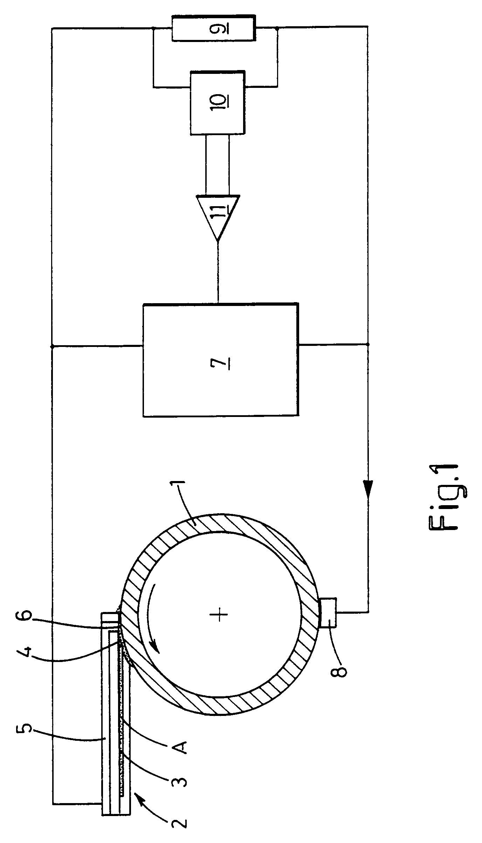

Fig. 1 shows a bearing ring 1 as a metal piece to be machined, said ring 1 being provided with a raceway which has to be treated electrochemically. Raceways may have out-of-roundness and elevations of up to ten µm, resulting from previous operations such as grinding. Removing these irregularities results in raceways with a circular geometry and consequently with reduced noise levels and increased operational life. An electrode means 2 includes a channel 3 for delivering electrolyte A through said channel 3 to an orifice 4. The electrode means 2 comprises an electrode 5 which is electrically isolated from the electrolyte A, apart from the end of the electrode 5 which forms a narrow gap 6 with the ring 1. Electrolyte A is passed, through the orifice 4, tangentially to the ring 1 through the gap 6 at a uniform velocity. The pressure with which the electrolyte A is passed through the gap is not very critical but higher pressures are unfavourable due to turbulence of the electrolyte resulting in uneven machining. The rotational direction of the ring 1 and the tangential electrolyte flow are preferably opposite to each other as this was found to give the best results. A DC power supply 7 maintains the ring 1 via a slip ring 8 at a positive voltage relative to the electrode 5.

For the controlled removal of the amount of material from a particular part of the ring 1 data is obtained on where and how much material should be removed. The data for controlled removal or material are obtained using the ring 1, the electrode 5 and a volt-ampère meter (not shown), wherein both the voltage and current are measured to derive one required data. The data is then used to adjust the voltage applied over the gap. Fig. 1 shows a schematic electric circuit comprising a shunt 9, bandpass filter 10 and amplifier 11. The current through the shunt 9 is used to the determine the level of feed-back to the power supply 7. Use of the electrode 2 and the ring 1 to control the electrochemical machining brings with it the advantage that the pace where material is to be removed and the place where data is obtained are the same and data processing is near instantaneous, and is one simplest possible, as no time or angular position dependent information has to be processed or the proper place of the ring 1 to be machined. Using a constant angular velocity of the ring and controlling the amount of material removed by varying the voltage applied it proved to be possible to reduce the out-of-roundness of a ring 1 from 8 µm to 0.5 µm compared to 2-3 µm with state of the art electrochemical machining procedures.

The data obtained comprises information on the deviations of the roundness of the ring 1 and this data is used to control the local removal of material, for example by changing the voltage applied as described above or by changing the length of time during which that particular part of the ring 1 is left under the electrode end 5. Thus the time needed to obtain a raceway with the desired quality is shortened. It is remarked that charging the voltage is usually easier to accomplish and gives more accurate results than changing the length of time. However, the latter possibility may have advantages during the first stages of the electrochemical machining operation.

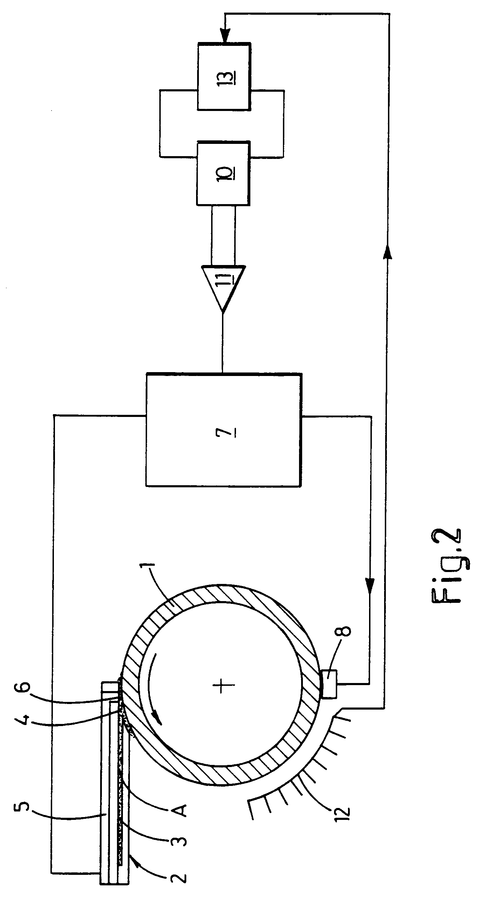

The method according to the invention offers the possibility to control the form of a raceway and allows the cheap manufacturing of a trilobed raceway, for example by superimposing a harmonic variation on the current at three times the frequency of the ring's rotation. To this end the angular position of the ring 1, which is usually an inner bearing ring, is continuously monitored, for example by position registration means 12 as sown in Fig. 2. The position registration means 12 controls a wave form generator 13 to modify the DC power supply 7.

The electrochemical machining process can be speeded up by using a group of electrodes 6. The electrodes of a group are preferably in an equally spaced relationship to each other. For the manufacture or a trilobed ring, it is preferred to use one electrode for control over the form or the bearing ring while the others are used to improve the smoothness of the raceway.

The electrode end 5 can be moved towards the axis of the ring 1 to adjust the width of the gap 6 as required.

## Claims

1. Method of electrochemically machining a metal piece, wherein by applying a voltage a current is passed across a narrow gap (1) formed by said metal piece and an adjustable electrode means (2) to locally remove material from the metal piece, electrolyte (A) being supplied to the gap (6) in a direction substantially tangential to the surface of the metal piece, and the metal piece being rotated around its axis, the amount of current being under the control of a sensing means capable of sensing the surface of the metal piece, **characterized** in that the metal piece is a bearing ring (1), and wherein the electrochemical local removal of material from the bearing ring (1) is enhanced by controlling a parameter chosen from the group of
i) changing the speed with which the bearing ring (1) is rotated around its axis to change the time during which a local elevation is subjected to electrochemical machining; and
ii) increasing the voltage when the gap is narrow due to a local elevation on the bearing ring, said local removal being controlled by obtaining data from a sensing means comprising the bearing ring (1), the adjustable electrode means (2) and a Volt-Ampere,meter, and using the voltage and current being measured as data to control the parameter.

2. Method according to claim 1, **characterized** in that the bearing ring (1) is rotated around its axis at a constant angular velocity and the amount of material removed is controlled by varying the voltage applied.

3. Method according to claim 1 or 2, **characterized** in that the rotational direction of the bearing ring (1) and the tangential electrolyte (A) flow are opposite to each other.

4. Method according to any of the preceding claims, **characterized** in that a group of electrodes (5) is used.

5. Method according to claim 4, **characterized** in that the electrodes (5) of a group are in an equally spaced relationship to each other.

6. Method according to any of the preceding claims, **characterized** in that the bearing ring (1) is a cylindrical roller bearing inner ring and material is removed from the raceway of the outer ring while a harmonic variation is superposed on the current at three times the frequency of the rings rotational speed, resulting in a trilobed raceway.

## Patentansprüche

1. Verfahren zum elektromechanischen abhebenden Bearbeiten eines Metallstücks, bei dem durch Anlegen einer Spannung ein Strom über eine enge Spalte (6) geleitet wird, die durch das Metallstuck und eine einstellbare Elektrodeneinrichtung (2) gebildet wird, zum lokalen Entfernen von Material vom Metallstück, wobei Elektrolyt (A) in die Spalte (6) in einer Richtung eingebracht wird, die im wesentlichen tangential zur Oberfläche des Metallstücks verläuft, und wobei das Metallstück um seine Achse gedreht wird, wobei die Stromstärke unter der Steuerung einer Erfassungseinrichtung ist, die die Oberfläche des Metallstücks abtastet, dadurch gekennzeichnet, daß das Metallstück ein Lagerring (1) ist und das elektrochemische lokale Entfernen von Material vom Lagerring (1) durch Steuern eines Parameters aus der folgenden Gruppe gesteigert wird:
i) Verändern der Geschwindigkeit, mit der der Lagerring (1) um seine Achse gedreht wird, zum Verändern der Zeit, während der eine örtliche Erhebung elektrochemisch bearbeitet wird, und
ii) Erhöhen der Spannung, wenn die Spalte aufgrund einer örtlichen Erhebung auf dem Lagerring eng ist, wobei die örtliche Entfernung dadurch gesteuert wird, daß Daten von einer Erfassungseinrichtung eingeholt werden, die den Lagerring (1), die einstellbare Elektrodeneinrichtung (2) und ein Volt-Ampere-Meter aufweist, und die Spannung und die Stromstärke als Daten zum Steuern der Parameter verwendet werden.

2. Verfahren nach Anspruch 1, dadurch gekennzeichnet, daß der Lagerring (1) mit einer konstanten Winkelgeschwindigkeit um seine Achse gedreht wird und die Menge entfernten Materials durch Verändern der angelegten Spannung gesteuert wird.

3. Verfahren nach Anspruch 1 oder 2, dadurch gekennzeichnet, daß die Drehrichtung des Lagerrings (1) und der tangentiale Fluß des Elektrolyten (A) einander entgegengesetzt sind.

4. Verfahren nach einem der vorhergehenden Ansprüche, dadurch gekennzeichnet, daß eine Gruppe von Elektroden (5) verwendet wird.

5. Verfahren nach Anspruch 4, dadurch gekennzeichnet, daß die Elektroden (5) einer Gruppe in einem gleich beabstandeten Verhältnis zueinander sind.

6. Verfahren nach einem der vorhergehenden Ansprüche, dadurch gekennzeichnet, daß der Lagerring (1) ein zylindrischer innerer Rollenlagerring ist und Material von der Lauffläche des äußeren Rings entfernt wird, während der Strom mit einer harmonischen Veränderung überlagert wird, die das Dreifache der Frequenz des Rotationsgeschwindikgeit des Rings beträgt, wodurch eine dreilappige Lauffläche entsteht.

## Revendications

1. Procédé d'usinage électrochimique d'une pièce de métal, dans lequel, par application d'une tension, un courant traverse un étroit intervalle (6) formé par ladite pièce de métal et un moyen d' électrode réglable (2) dans le but d' éliminer localement du matériau de la pièce de métal, de l'électrolyte (A) étant alimenté dans l'intervalle (6) selon une direction substantiellement tangentielle à la surface de la pièce de métal, et la pièce de métal étant entraînée en rotation autour de son axe, la quantité de courant étant sous le contrôle d'un moyen de détection apte à détecter la surface de la pièce de métal, ***caractérisé en ce que*** la pièce de métal est une bague (1) de roulement (ou palier), et dans lequel l'élimination locale par électrochimie du matériau de la bague (1) de roulement est renforcée par le contrôle d'un paramètre choisi dans le groupe constitué par :
(i) le changement de la vitesse à laquelle la bague (1) de roulement est entraînée en rotation autour de son axe dans le but de changer la durée pendant laquelle une surélévation locale est soumise à l'usinage électrochimique ; et
(ii) l'augmentation de la tension lorsque l'intervalle est étroit par suite d'une surélévation locale sur la bague de roulement,
ladite élimination locale étant contrôlée par l'obtention de données provenant d'un moyen de détection comprenant la bague (1) de roulement, le moyen d'électrode réglable (2) et un voltampèremètre, et en utilisant la tension et le courant mesurés comme données pour contrôler le paramètre.

2. Procédé selon la Revendication 1, ***caractérisé en ce que*** la bague (1) de roulement est entraînée en rotation autour de son axe à une vitesse angulaire constante et la quantité de matériau éliminé est contrôlée en faisant varier la tension appliquée.

3. Procédé selon la Revendication 1 ou 2, ***caractérisé en ce que*** le sens de rotation de la bague (1) de roulement et l'écoulement tangentiel de l'électrolyte (A) sont opposés l'un à l'autre.

4. Procédé selon l'une quelconque des Revendications précédentes, ***caractérisé en ce qu***'on utilise un groupe d'électrodes (5).

5. Procédé selon la Revendication 4, ***caractérisé en ce que*** les électrodes (5) d'un groupe sont en relation équidistante entre elles.

6. Procédé selon l'une quelconque des Revendications précédentes, ***caractérisé en ce que*** la bague (1) de roulement est une bague intérieure de roulement à rouleaux cylindriques et en ce que le matériau est éliminé du chemin de roulement du rouleau extérieur pendant qu'une variation harmonique est superposée sur le courant à trois fois la fréquence de vitesse de rotation des bagues, résultant en un chemin de roulement trilobé.
